(19) **Europäisches Patentamt**
**European Patent Office**
**Office européen des brevets**

(11) **EP 1 312 976 B1**

(12) **EUROPEAN PATENT SPECIFICATION**

(45) Date of publication and mention
of the grant of the patent:
**21.04.2010 Bulletin 2010/16**

(51) Int Cl.:
***G02F 1/35*** (2006.01)

(21) Application number: **02025493.4**

(22) Date of filing: **15.11.2002**

(54) **Laser apparatus provided with a wavelength conversion device**

Lasergerät ausgestattet mit einer Vorrichtung zur Wellenlängenumwandlung

Appareil laser equipé d'un dispositif de conversion de longueur d'onde

(84) Designated Contracting States:
**DE FR GB**

(30) Priority: **19.11.2001 JP 2001353810**

(43) Date of publication of application:
**21.05.2003 Bulletin 2003/21**

(73) Proprietor: **Nidek Co., Ltd.**
**Gamagori-shi,**
**Aichi 443-0035 (JP)**

(72) Inventors:
• **Yamada, Tsuyoshi**
**Toyota-shi,**
**Aichi, 473-0928 (JP)**
• **Hayashi, Kenichi**
**Gamagori-shi,**
**Aichi, 443-0021 (JP)**

(74) Representative: **Hofer, Dorothea et al**
**Prüfer & Partner GbR**
**Patentanwälte**
**Sohnckestrasse 12**
**81479 München (DE)**

(56) References cited:
**EP-A- 1 041 427      EP-A- 1 120 816**
**DE-A- 2 436 623      US-A- 5 012 360**
**US-A- 5 581 395**

• YAP Y K ET AL: "Long-term operation of CsLiB6O10 at elevated crystal temperature" OPTICS LETTERS, vol. 23, no. 1, 1 January 1998 (1998-01-01), pages 34-36, XP002232149
• PATENT ABSTRACTS OF JAPAN vol. 2000, no. 01, 31 January 2000 (2000-01-31) -& JP 11 271820 A (RIKAGAKU KENKYUSHO; NIDEK CO LTD), 8 October 1999 (1999-10-08)

## Description

### BACKGROUND OF THE INVENTION

1. Field of the Invention

The present invention relates to a laser apparatus provided with a wavelength conversion device using a nonlinear crystal.

2. Description of Related Art

A laser apparatus provided with a wavelength conversion device according to the preamble of claim 1 is disclosed by Y. K. Yap et al. in Optics Letters, vol. 23, no. 1, 1.1.1998, pages 34-36.

Nonlinear crystals to be used for wavelength conversion include crystals having the property of deliquescing such as a cesium-lithium-borate (CLBO) crystal and a $KH_2PO_4$ (KDP) crystal. To stably use these crystals having the deliquescing property over a long period of time, a measure against the deliquescing property needs to be taken. The conventionally used method against the deliquescing property is for example a method of holding the crystal in a low humidity environment by simultaneously holding the crystal and a dehumidifying agent such as silica gel in a sealed container provided with a pair of optical windows which transmit an incoming light beam and an outgoing light beam or by converting the internal air of the container by argon gas or nitrogen gas. This conventionally used method is shown in DE-A-2436623.

However, in the wavelength conversion device structured of the sealed container having the optical windows, the windows each have to be applied with an antireflection film against the light of wavelengths to be used and there is a limit on the kinds of usable energy according to damage threshold values of the windows. These restrictions would cause problems in achieving wavelength conversion with high efficiency and high output power. In particular, in the wavelength conversion device with the sealed container having the windows which allow ultraviolet light to come in and go out of the container, there would often cause problems of the ultraviolet light to the windows and the damage threshold values of the windows.

Some crystals to be used in the above device are preferably maintained at high temperatures of 100°C or more. If the inside of the sealed container is heated to such high temperatures, gases may occur from constituent materials of the device, which makes the windows opaque. This results in problems of a reduction in intensity of the incoming light beam to the crystal, a reduction in intensity of the out ing light beam, and a damage to th windows.

US-A-5 012 360 describes a dehumidifier for a magnetic disk apparatus. The dehumidifier is of electrical type and combined with a reversible moisture absorbent such as silica gel. An air vent is required in order to allow outside air to enter a container of the magnetic disk apparatus in order to temper the change of pressure in the container.

EP-A-1 120 816 relates to a substrate container and a method of dehumidifying a container for substrates such as semiconductor wafers, photo-masks, hard-disks, etc.

EP-A-1 041 427 relates to a crystal support device which is provided with a beam passage component at the beam entrance and exit sides thereof in order to prevent beam fluctuation produced when a non-linear optical crystal is maintained at a high temperature.

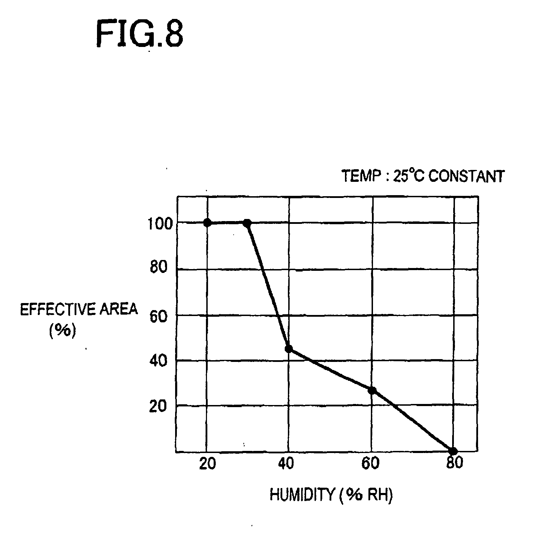

It is to be noted that an index of the low humidity environment is shown in the following report. In a presentation on "Packaging technique of CLBO crystal" in the fourth symposium on "Photon measuring and processing technique" (held on November 22, 2000), there was reported an experiment result that "in the case that a CLBO crystal was left at a certain humidity for 24 hours, the crystal left at a humidity of 40% was reduced in an effective area that could transmit wave surfaces to 45%, while the crystal left at a humidity of 30% could maintain the effective area of almost 100%" as is shown in Figure 8. Thus, the humidity of 30% can be considered as a practical using level.

### SUMMARY OF THE INVENTION

The present invention has been made in view of the above circumstances and has an object to overcome the above problems and to provide a laser apparatus provided with a wavelength conversion device capable of providing stable wavelength conversion characteristics of a nonlinear crystal having the deliquescing property over a long period of time.

Additional objects and advantages of the invention will be set forth in part in the description which follows and in part will be obvious from the description, or may be learned by practice of the invention. The objects and advantages of the invention may be realized and attained by means of the instrumentalities and combinations particularly pointed out in the appended claims.

To achieve the above object, the present invention provides a laser apparatus according to claim 1. Preferred embodiments are set forth in the sub-claims.

Further developments of the present invention are given in the dependent claims.

BRIEF DESCRIPTION OF THE DRAWINGS

The accompanying drawings, which are incorporated in and constitute a part of this specification illustrate an embodiment of the invention and, together with the description, serve to explain the objects, advantages and principles of the invention.

In the drawings,

Fig. 1 is a view schematically showing a structure of a wavelength conversion device in an embodiment according to the present invention;
Fig. 2 is a view schematically showing a structure of a dehumidifier;
Fig. 3 is a view schematically showing a structure of a labyrinth type structural unit;
Fig. 4 is a view showing conditions of an evaluation test of the dehumidifier;
Fig. 5 is a graph showing evaluation results of the evaluation test;
Fig. 6 is a view of a modified example of the wavelength conversion device provided with a closing mechanism in an opening;
Fig. 7 is a view schematically showing a structure of an ophthalmic laser apparatus using the wavelength conversion device; and
Fig. 8 is a graph showing a relation between an effective area of a nonlinear crystal capable of transmitting wave surfaces and humidity.

DETAILED DESCRIPTION OF THE PREFERRED EMBODIMENTS

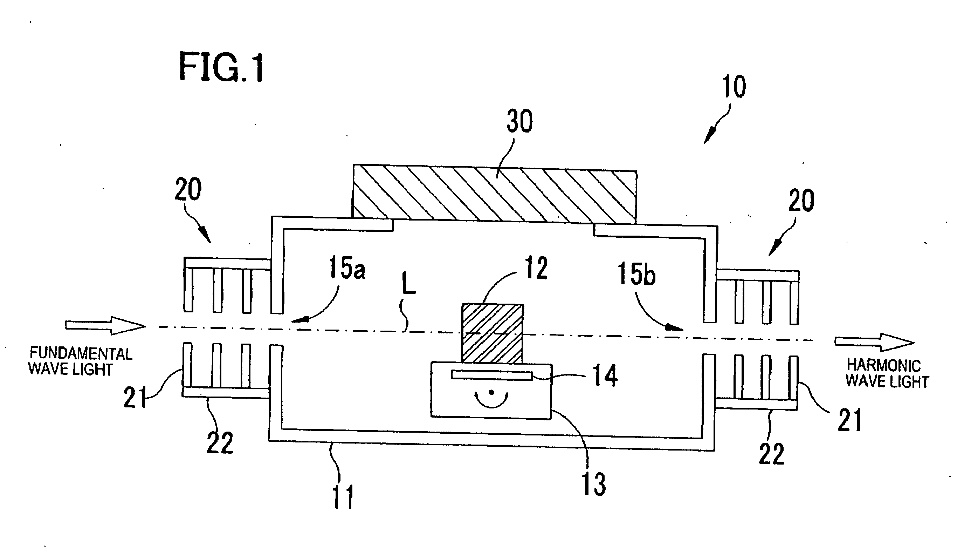

A detailed description of a preferred embodiment of the present invention will now be given referring to the accompanying drawings. Fig. 1 is a view schematically showing a structure of a wavelength conversion device in the present embodiment.

The wavelength conversion device 10 is internally provided with a nonlinear crystal 12 as a wavelength conversion element disposed in a container 11. The nonlinear crystal 12 having the deliquescing property is, for example, a CLBO crystal, a KDP crystal, and a DKDP ($KD_2PO_4$) crystal. In the present embodiment, the CLBO crystal is used. The nonlinear crystal 12 is attached on an angle adjustment unit 13 whereby phase matching of the crystal 12 can be adjusted with respect to an optical axis L. The angle adjustment unit 13 is held in the container 11. This unit 13 is internally provided with a heater 14 for heating the nonlinear crystal 12 to a predetermined temperature.

At both ends of the container 11, a pair of openings 15a and 15b are formed concentrically with the optical axis L to transmit an incoming light beam to the nonlinear crystal 12 and an outgoing light beam therefrom having a converted wavelength, respectively. Each size of the openings 15a and 15b is determined to be a slightly larger than the diameter of a light beam. Thus, the light beam incomes the container 11 through the opening 15a, is converted in wavelength by the nonlinear crystal 12. The wavelength converted light beam then outgoes through the opening 15b. The container 11 has a substantially sealed structure except for the openings 15a and 15b.

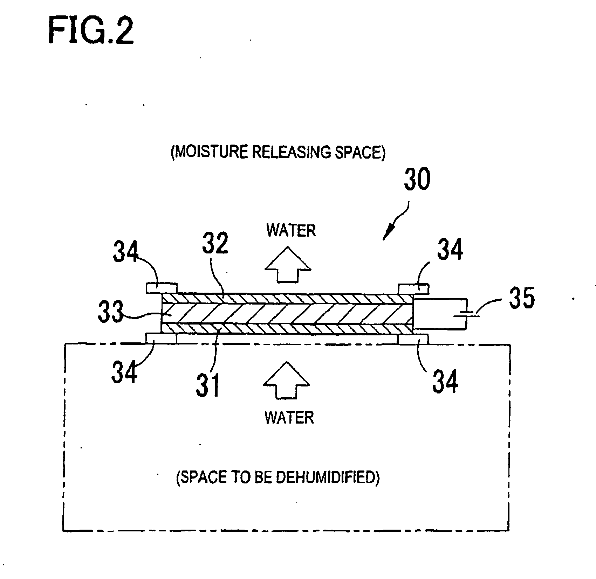

On the top of the container 11, an electrolytic dehumidifier 30 is mounted in an exposed state to the internal space of the container 11. Fig. 2 is a view schematically showing the structure of the dehumidifier 30. Numeral 31 is a positive electrode which electrolyzes water molecules (moisture) to generate oxygen. Numeral 32 is a negative electrode which causes the reaction of hydrogen and oxygen to yield water molecules. The positive electrode 31 and the negative electrode 32 are made of porous substrates. A solid polyelectrolyte film 33 serving as a hydrogen ion exchange membrane is sandwiched between these electrodes 31 and 32, which forming a laminated structure. These laminated structural elements are disposed between insulating frames 34. The electrodes 31 and 32 are connected to a power source 35 which applies a predetermined direct current voltage.

When a direct current voltage is applied from the power source 35, the following (formula 1) reaction occurs in the positive electrode 31 disposed close to a space to be dehumidified (i.e., the container 11), thereby electrolyzing a water molecule to dissociate the water molecule into hydrogen ions and oxygen. The hydrogen ions move through the solid polyelectrolyte film 33 to reach the negative electrode 32. The hydrogen ions reached the negative electrode 32 react, as below (formula 2), with oxygen in air in a moisture releasing space (i.e., in the outside of the container 11) to form water molecules, which are discharged outside. Accordingly, the moisture in the space to be dehumidified is eliminated.

$$H_2O \rightarrow 2H^+ + (1/2)O_2 + 2e^-  \qquad \text{(Formula 1)}$$

$$2H^+ + (1/2)O_2 + 2E^- \rightarrow H_2O \qquad \text{(Formula 2)}$$

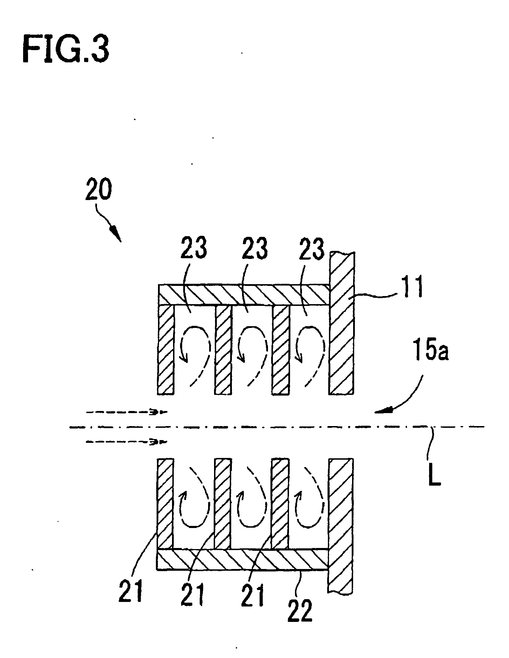

In Fig. 1, a labyrinth structural unit 20 is provided in each of the openings 15a and 15b of the container 11. Each unit 20 has a hole allowing an incoming light beam and an outgoing light beam to pass through. As shown in Fig. 3, the labyrinth structural unit 20 provided in the opening 15a (the unit 20 provided in the opening 15b is identical in structure and its explanation is omitted herein) is constituted of a cylindrical member 22 and a plurality of aperture plates 21 spaced like teeth of a comb. Each plate 21 has an aperture placed in alignment with the optical axis L. Each aperture is preferably determined slightly larger in size than the diameter of the light beam. The cylindrical member 22 and each aperture plate 21 (including the wall surface of the container 11) produce chambers 23 for therein circulating ambient air. This prevents the ambient air from entering the inside of the container 11 through the opening 15a. Thus, the dehumidified container 11 can be easily maintained in a state of low humidity.

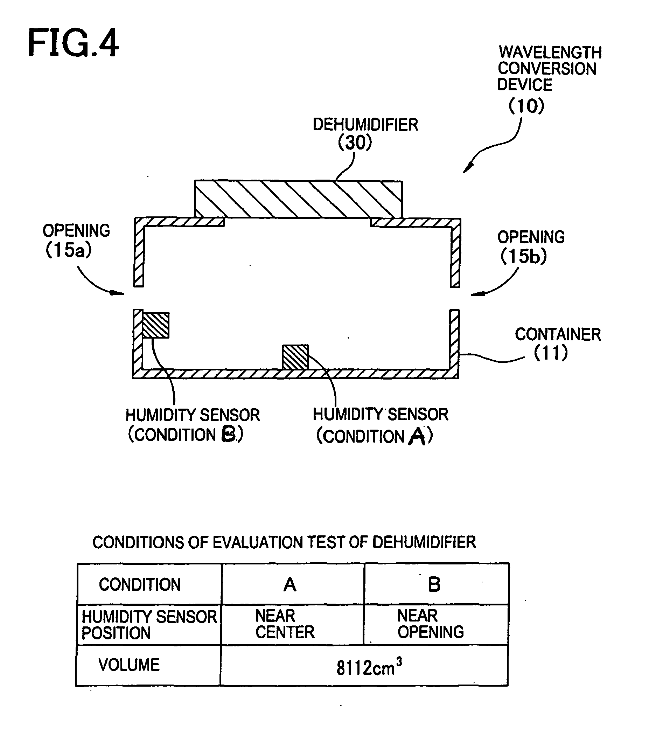

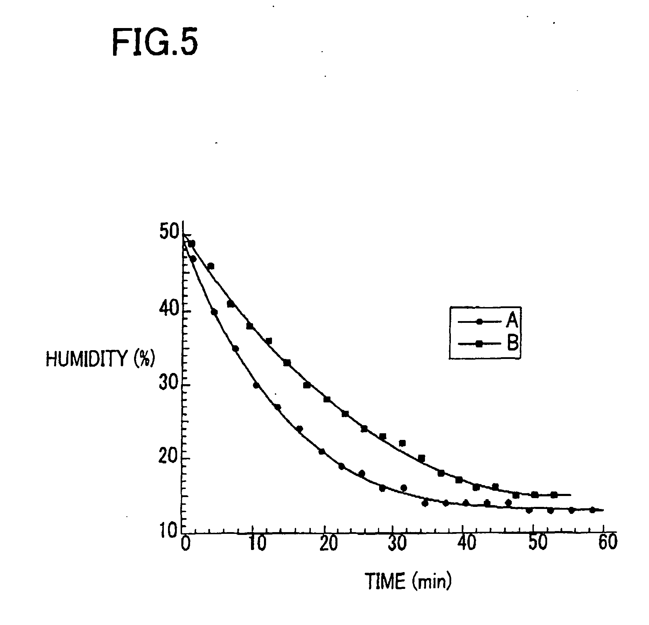

By use of the above wavelength conversion device 10, the effect of dehumidification by the dehumidifier 30 were tested by the following experiment. The experiment was made on dehumidification evaluation on the condition that dehumidification sensors were placed in the container 11 of a volume of about 8,112 cm$^3$ (32.4 cm (width) $\times$ 23.4 cm (depth) x 10.7 cm (height)) at the almost center of an inner bottom (condition A) and at the side of the opening 15a (condition B), respectively, as shown in Fig. 4. The dehumidifier 30 used in the experiment has a dehumidifying power of 16g/day, a power consumption of about 5W, and a moisture releasing port of a size of 9.5 cm x 9.5 cm. Each size of the pair of openings 15a and 15b was 5 mm in diameter. The experimental results are shown in Fig. 5. As apparent from the graph of Fig. 5, the humidity decreased to 30% or less in less than 20 minutes under either condition.

Next, a comparison is made between the conditions in the above experiment. The condition A that the sensor was placed at the almost center of the inner bottom of the container 11 shows a faster speed to reduce humidity than the condition B that the sensor was placed at the side of the opening 15a. Specifically, it took about 18 minutes to reduce the humidity in the vicinity of the opening (condition B) to 30%. On the other hand, the humidity in the vicinity of the center (condition A) was reduced to 30% in about 11 minutes. This shows that a humidity gradient that gradually increases from the center to the opening occurs in the container 11.

From the above experiment results, even if the container 11 which internally holds the nonlinear crystal 12 has the openings 15a and 15b, the inside of the container 11 can be maintained at a low humidity of 30% or less by use of the dehumidifier 30. By use of this wavelength conversion device 10, the nonlinear crystal having the deliquescing property can be used in a low humidity environment, enabling stable wavelength conversion over a long period of time. This wavelength conversion device 10 is provided with no optical windows for transmitting an incoming light beam and an outgoing light beam, differently from the conventional device, and therefore can be used without consideration of problems about transmittance and damage threshold values of the windows. This makes it possible to achieve wavelength conversion at a high efficiency and high output power. In particular, the device is suitable for wavelength conversion to ultraviolet light.

In the laser apparatus using the above wavelength conversion device 10, the dehumidifier 30 is full-time worked for dehumidification to hold the nonlinear crystal 12 in a low humidity environment. The wavelength conversion device 10 is preferably used under condition that a heater 14 is energized in advance to heat the nonlinear crystal 12. The CLBO crystal is preferably heated to 130 to 160°C. The heating temperature is detected by a temperature sensor not shown disposed near the nonlinear crystal 12 and controlled to be maintained at an almost constant temperature. When the nonlinear crystal 12 is heated, the moisture adsorbed in the surfaces of the crystal 12 is released and then eliminated by the dehumidifier 30. This heating of the crystal 12 makes it possible to achieve more stable wavelength conversion.

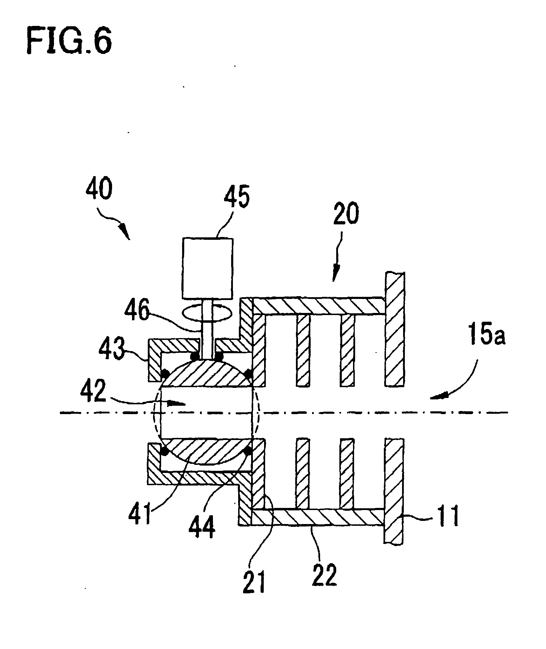

Fig. 6 is a view of a modified example of the wavelength conversion device 10 shown in Fig. 1. This modified device is additionally provided with a closing mechanism for closing the pair of openings 15a and 15b of the container 11. In Fig. 6, only the closing mechanism provided in the opening 15a is shown and the other mechanism provided in the opening 15b having an identical structure is omitted. The closing mechanism in this example is structured of a ball valve 40 which is attached to the outside of the labyrinth structural unit 20. The ball valve 40 is constituted of a spherical member 41 with a through hole 42 having the same diameter as that of the opening 15a (the aperture of the aperture plate 21), a holding member 43 which rotatably holds the spherical member 41, a driving unit 45 which rotates the spherical member 41 around a shaft 46 attached thereto, and a shielding member 44 disposed between the spherical member 41 and the aperture plate 21. The shielding member 44 is constituted of an O-ring, which enhances airtightness of the container 11 by the spherical member 41. Furthermore, the shielding member 44 may be disposed between the spherical member 41 and the holding member 43 as shown in Fig. 6. An identical ball valve 40 is simultaneously attached to the outside of the other unit 20 disposed on the opening 15b side.

At a time of the execution of wavelength conversion, the spherical members 41 are positioned so that each through hole 42 is directed as shown in Fig. 6 to allow the incoming light beam and the outgoing light beam to pass through the holes 42. When the wavelength conversion is not executed, the spherical members 41 are rotated 90 degrees about the shafts 46 by the driving units 45 so that each spherical surface of the spherical members 41 closes each aperture of the aperture plates 21 in contact thereto. This brings the openings 15a and 15b into a closed state. Namely, the spherical members 41 serve as a cover member for closing the openings 15a and 15b.

In this manner, the openings 15a and 15b are closed during the nonexecution of wavelength conversion to substantially shield the inside of the container 11 from outside air, thereby enhancing a dehumidifying effect to hold the nonlinear crystal 12 in a low humidity environment. Release of the closed state of the openings 15a and 15b may be performed in synchronization with a signal to enable emission of the laser beam in a laser apparatus. During movement of the wavelength conversion device 10, for example, the dehumidifier 30 is battery-driven and the openings 15a and 15b are held closed.

The above closing mechanism may be constructed by a flat cover member slidable to close/open the openings 15a and 15b.

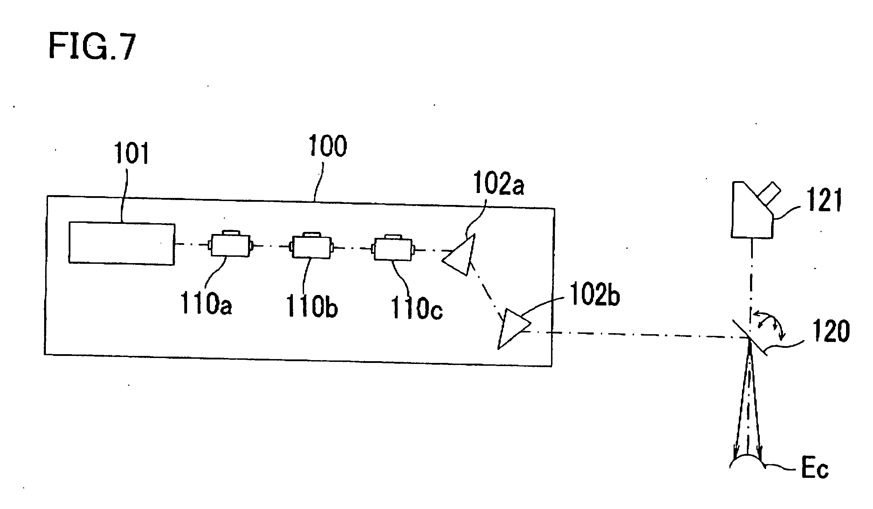

Fig. 7 is a view schematically showing an example of an ophthalmic laser apparatus using the wavelength conversion device 10. Numeral 100 is a laser source unit which is provided with a YAG laser oscillator 101 serving as a laser source capable of emitting a fundamental wave light having a wavelength of 1064 nm, three wavelength conversion devices 110a, 110b, and 110c, and prisms 102a and 102b for separating a wavelength-converted harmonic wave light from the fundamental wave light. The wavelength conversion devices 110a, 110b, and 110c each have the same structure as that shown in Fig. 1, except for the kinds of nonlinear crystals individually disposed in the devices or phase matching angles of the crystals.

By each nonlinear crystal disposed in the wavelength conversion devices 110a, 110b, and 110c, the fundamental wave light beam having a wavelength of 1064 nm is converted to an ultraviolet laser beam having a wavelength of 400 nm or less. For instance, the wavelength conversion device 110a converts a part of the fundamental wave light beam of 1064 nm which is emitted from the YAG laser oscillator 101 to the second harmonic wave light beam of 532 nm. The wavelength conversion device 1 10b further converts this light beam of 532 nm to a light beam of 266 nm which is the second harmonic wave light beam. The wavelength conversion device 110c generates a light beam of 213 nm which is a sum frequency of the fundamental wave light beam which has not been wavelength-converted by the wavelength conversion device 110a and the light beam of 266 nm which has been wavelength-converted by the wavelength conversion device 110b.

The prism 102a is used to separate the light beam emerging from the device 110c into wavelength components. Of the separate wavelengths, a light beam of 213 nm is allowed to enter the prism 102b, while light beams of other wavelengths are intercepted by a light shielding member not shown. The light beam of 213 nm, of which an outgoing direction is adjusted by the prism 102b, emerges from the laser source unit 100.

The laser beam of 213 nm emerging from the unit 100 is reflected by a scan mirror 120 to two-dimensionally scan. This scan mirror 120 may be constructed of two galvano mirrors, alternatively, may be a linear scan mirror which allows scanning of the laser beam in two orthogonal directions. By operation of the scan mirror 120, the laser beam is directed to a cornea Ec of a patient's eye to be irradiated and ablates the cornea Ec. At this time, a control unit not shown controls the scanning operation of the scan mirror 120 to adjust an irradiation position and an irradiation amount (irradiation time) of the laser beam with respect to the cornea Ec to change the curvature of the cornea Ec for refraction. In Fig. 7, numeral 121 is a microscope serving as an observation optical system for observing the patient's eye.

The present invention may be embodied in other specific forms without departing from the essential characteristics thereof. For instance, in the laser source unit 100 mentioned above, the wavelength conversion devices 110a, 110b, and 110c hold the nonlinear crystals individually. Alternatively, a plurality of nonlinear crystals may be disposed together in the container 11 of Fig. 1. Each crystal is attached with an angle adjustment unit. It is to be noted that, for the conversion of the light beam having a wavelength of 1064 nm to its second harmonic light beam having a wavelength of 532 nm, a nonlinear crystal having no deliquescing property such as KTP can be used. This crystal does not need the structure of the wavelength conversion device 10.

As described above, according to the present invention, wavelength conversion by a nonlinear crystal having the deliquescing property can stably be performed over a long period of time.

**Claims**

**1.** A laser apparatus comprising:

a laser oscillator (101) arranged to emit a laser beam having a wavelength and a diameter; and

a wavelength conversion device (10; 110a-110c) arranged to convert the wavelength of the laser beam emitted from the laser oscillator so as to generate a converted laser beam, the wavelength conversion device including:

a container (11) placed in an optical path of the laser beam emitted from the laser oscillator:
a nonlinear crystal (12) having a deliquescing property, disposed in the container and placed in the optical path of the laser beam,;
a heater (14) arranged to heat the nonlinear crystal to a predetermined temperature, wherein

the container (11) is provided with a first opening (15a) and a second opening (15b) each placed in the optical path of the laser beam so that the laser beam emitted from the laser oscillator enters the container through the first opening and the converted laser beam exits the container through the second opening, each opening allowing air to enter and exit the container,
**characterised by** a dehumidifier (30) of electrical type arranged to discharge moisture to the outside by electrolyzing the moisture in the container, the dehumidifier being mounted in an exposed state to the internal space of the container along the optical path of the laser beam, and in that the first opening and the second opening have a slightly larger size than the diameter of the laser beam.

2. The laser apparatus according to claim 1, wherein a dehumidifier maintains an internal environment of the container, at a low humidity of 30% or less.

3. The laser apparatus according to claim 1 or 2, wherein the dehumidifier utilizes a solid polyelectrolyte film.

4. The laser apparatus according to one of claims 1 to 3, wherein at least one of the first and second openings is provided with a chamber unit (20) having a plurality of chambers (23) in which the air is circulated and an aperture having a slightly larger size than the diameter of the laser beam.

5. The laser apparatus according to one of claims 1 to 4, wherein at least one of the first and second openings is provided with closing means (40) arranged to close the opening.

6. The laser apparatus according to one of claims 1 to 5, wherein the wavelength conversion device is arranged to convert the laser beam emitted from the laser oscillator (101) to an ultraviolet laser beam having a wavelength of 400 nm or less.

7. The laser apparatus according to claim 6 further including an irradiation optical system (102a, 102b, 120) for irradiating the ultraviolet laser beam to a patient's eye (Ec).

**Patentansprüche**

1. Laservorrichtung, umfassend:

einen Laseroszillator (101), der angeordnet ist, um einen eine Wellenlänge und einen Durchmesser aufweisenden Laserstrahl zu emittieren; und
eine Wellenlängenkonvertierungseinrichtung (10; 110a-110c), die angeordnet ist, um die Wellenlänge des von dem Laseroszillator emittierten Laserstrahls zu konvertieren, um einen konvertierten Laserstrahl zu erzeugen, wobei die Wellenlängenkonvertierungseinrichtung einschließt:

einen Behälter (11), der in einem Strahlengang des von dem Laseroszillator emittierten Laserstrahls angeordnet ist;
einen eine hygroskopische Eigenschaft aufweisenden nichtlinearen Kristall (12), der in dem Behälter angeordnet ist und im Strahlengang des Laserstrahls angeordnet ist;
eine Heizung (14), die angeordnet ist, um den nichtlinearen Kristall auf eine vorher festgelegte Temperatur zu erwärmen, wobei
der Behälter (11) mit einer ersten Öffnung (15a) und einer zweiten Öffnung (15b) ausgestattet ist, von denen jede im Strahlengang des Laserstrahls angeordnet ist, so dass der von dem Laseroszillator emittierte Laserstrahl über die erste Öffnung in den Behälter eintritt und der konvertierte Laserstrahl über die zweite Öffnung aus dem Behälter austritt, wobei jede Öffnung es Luft ermöglicht, in den Behälter einzutreten oder aus dem Behälter auszutreten;

**gekennzeichnet durch** einen elektrischen Entfeuchter (30), der angeordnet ist, um Feuchtigkeit **durch** Elektrolysieren der Feuchtigkeit im Behälter nach draußen abzuführen, wobei der Entfeuchter in einem gegenüber dem Innenraum des Behälters exponierten Status entlang des Strahlengangs des Laserstrahls angebracht ist, und **dadurch**, dass die erste Öffnung und die zweite Öffnung eine geringfügig größere Größe als dem Durchmesser des Laserstrahls aufweisen.

2.   Laservorrichtung gemäß Anspruch 1, wobei ein Entfeuchter ein inneres Milieu des Behälters bei einer geringen Feuchtigkeit von 30% oder weniger hält.

3.   Laservorrichtung gemäß Anspruch 1 oder 2, wobei der Entfeuchter einen festen Polyelektrolytfilm verwendet.

4.   Laservorrichtung gemäß einem der Ansprüche 1 bis 3, wobei mindestens eine der ersten und zweiten Öffnungen mit einer Kammereinheit (20) mit einer Vielzahl von Kammern (33) aufweist, in denen die Luft zirkuliert wird, und mit einer eine geringfügig größere Größe als dem Durchmesser des Laserstrahls aufweisenden Öffnung ausgestattet ist.

5.   Laservorrichtung gemäß einem der Ansprüche 1 bis 4, wobei mindestens eine der ersten und zweiten Öffnungen mit zum Schließen der Öffnung angeordneter Schließeinrichtung (40) ausgestattet ist.

6.   Laservorrichtung gemäß einem der Ansprüche 1 bis 5, wobei die Wellenlängenkonvertierungseinheit angeordnet ist, um den von dem Laseroszillator (101) emittierten Laserstrahl in einen ultravioletten Laserstrahl mit einer Wellenlänge von 400 nm oder weniger zu konvertieren.

7.   Laservorrichtung gemäß Anspruch 6, die ferner ein optisches Bestrahlungssystem (102a, 102b, 120) zum Bestrahlen eines Patientenauges mit dem ultravioletten Laserstrahl einschließt.


**Revendications**

1.   Dispositif laser comprenant :

un oscillateur laser (101) agencé pour émettre un faisceau laser ayant une longueur d'onde et un diamètre ; et un dispositif de conversion de longueur d'onde (10 ; 110a; 110c) agencé pour convertir la longueur d'onde du faisceau laser émis par l'oscillateur laser de manière à générer un faisceau laser converti, le dispositif de conversion de longueur d'onde comprenant :

un contenant (11) placé dans un trajet optique du faisceau laser émis par l'oscillateur laser ; un cristal non linéaire (12) ayant une propriété de déliquescence, disposé dans le contenant et placé dans le trajet optique du faisceau laser ; un dispositif de chauffage (14) agencé pour chauffer le cristal non linéaire à une température prédéterminée, dans lequel le contenant (11) est pourvu d'une première ouverture (15a) et d'une deuxième ouverture (15b) placées chacune dans le trajet optique du faisceau laser de sorte que le faisceau laser émis par l'oscillateur laser pénètre dans le contenant à travers la première ouverture et que le faisceau laser converti sorte du contenant à travers la deuxième ouverture, chaque ouverture permettant que de l'air pénètre dans le contenant et sorte de celui-ci,

**caractérisé par** un déshumidificateur (30) du type électrique agencé pour décharger l'humidité à l'extérieur en électrolysant l'humidité dans le contenant, le déshumidificateur étant monté dans un état exposé à l'espace interne du contenant le long du trajet optique du faisceau laser, et en ce que la première ouverture et la deuxième ouverture ont une taille légèrement plus grande que le diamètre du faisceau laser.

2.   Dispositif laser selon la revendication 1, dans lequel un déshumidificateur maintient un environnement interne du contenant à une faible humidité de 30 % ou moins.

3.   Dispositif laser selon la revendication 1 ou 2, dans lequel le déshumidificateur utilise un film de polyélectrolyte solide.

4.   Dispositif laser selon l'une des revendications 1 à 3, dans lequel au moins l'une des première et deuxième ouvertures est pourvue d'une unité de chambres (20) comportant une pluralité de chambres (23) dans lesquelles l'air circule et une ouverture ayant une taille légèrement plus grande que le diamètre du faisceau laser.

5. Dispositif laser selon l'une des revendications 1 à 4, dans lequel au moins l'une des première et deuxième ouvertures est pourvue de moyens de fermeture (40) agencés pour fermer l'ouverture.

6. Dispositif laser selon l'une des revendications 1 à 5, dans lequel le dispositif de conversion de longueur d'onde est agencé pour convertir le faisceau laser émis par l'oscillateur laser (101) en un faisceau laser ultraviolet ayant une longueur d'onde de 400 nm ou moins.

7. Dispositif laser selon la revendication 6, comprenant en outre un système optique de rayonnement (102a, 102b, 120) pour rayonner le faisceau laser ultraviolet vers l'oeil d'un patient (Ec).

# FIG.1

FUNDAMENTAL
WAVE LIGHT

HARMONIC
WAVE LIGHT

EP 1 312 976 B1

# FIG.2

(MOISTURE RELEASING SPACE)

30

WATER

34

32

34

35

33

31

34

34

WATER

(SPACE TO BE DEHUMIDIFIED)

FIG.3

# FIG.4

WAVELENGTH
CONVERSION
DEVICE
(10)

DEHUMIDIFIER
(30)

OPENING
(15a)

OPENING
(15b)

CONTAINER
(11)

HUMIDITY SENSOR
(CONDITION B)

HUMIDITY SENSOR
(CONDITION A)

CONDITIONS OF EVALUATION TEST OF DEHUMIDIFIER

| CONDITION | A | B |
|---|---|---|
| HUMIDITY SENSOR POSITION | NEAR CENTER | NEAR OPENING |
| VOLUME | $8112 cm^3$ | |

# FIG.5

# FIG.6

# FIG.7

EP 1 312 976 B1

# FIG.8

TEMP : 25°C CONSTANT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 2436623 A
- US 5012360 A
- EP 1120816 A
- EP 1041427 A

### Non-patent literature cited in the description

- **Y. K. Yap et al.** *Optics Letters,* 01 January 1998, vol. 23 (1), 34-36